# EUROPEAN PATENT APPLICATION

(11) **EP 4 503 815 A1**
(43) Date of publication of application: **05.02.2025**
(21) Application number: 23869850.0
(22) Date of filing: 30.06.2023
(51) Int. Cl.: H04W 72/12

(54) **DATA TRANSMISSION METHOD AND APPARATUS, STORAGE MEDIUM, ELECTRONIC DEVICE, AND PRODUCT**

(30) Priority: 30.09.2022 CN 202211230339
(71) Applicant: Tencent Technology (Shenzhen) Company Limited, Shenzhen, Guangdong 518057 (CN)
(72) Inventor: LEI, Yixue, Shenzhen, Guangdong 518057 (CN); JIA, Yuhang, Shenzhen, Guangdong 518057 (CN); YANG, Yong, Shenzhen, Guangdong 518057 (CN)
(74) Representative: Gunzelmann, Rainer
(86) International application number: PCT/CN2023/104785
(87) International publication number: WO 2024/066602

(57) **Abstract**

Provided in the embodiments of the present application are a data transmission method and apparatus, a storage medium, an electronic device, and a product. The data transmission method comprises: receiving periodic information of a service data packet which is sent by an application function entity; configuring the periodic information of the service data packet to an access network element by means of a configuration instruction; receiving first indication information, which is sent by the application function entity, wherein the first indication information is used for indicating that the periodic information of the service data packet has changed; and sending deactivation information to the access network element, wherein the deactivation information is used for instructing the access network element to suspend scheduling and transmission which are performed on the service data packet according to the periodic information.

## Description

### RELATED APPLICATION

This disclosure claims priority to Chinese Patent Application No. 202211230339.1, filed with the China National Intellectual Property Administration on September 30, 2022 and entitled "DATA TRANSMISSION METHOD AND APPARATUS, COMPUTER-READABLE MEDIUM, AND ELECTRONIC DEVICE".

### FIELD OF THE TECHNOLOGY

This disclosure relates to the field of computer and communication technologies, and specifically, to a data transmission method and apparatus, a storage medium, an electronic device, and a product.

### BACKGROUND OF THE DISCLOSURE

In a 5G system and an evolved 5G system, a high-bandwidth interactive service is an important service type, such as cloud gaming, virtual reality (VR), augmented reality (AR), mixed reality (MR), extended reality (XR), and cinematic reality (CR).

These interactive service data packets generally have periodicity during transmission. A wireless network may use the periodicity to improve usage efficiency of time-frequency resources by using a semi-persistent scheduling (SPS) or connected-discontinuous reception (C-DRX) mechanism.

However, the periodicity of the service data packets may change. Therefore, how to deal with this change and avoid affecting service experience is an urgent technical problem that needs to be resolved.

### SUMMARY

Embodiments of this disclosure provide a data transmission method and apparatus, a storage medium, an electronic device, and a product. This may indicate, when periodicity information of a service data packet changes, an access network-network element to suspend scheduled transmission of the service data packet based on the periodicity information of the service data packet in time; avoid a problem of quality of service (QoS) deterioration caused when the access network-network element continues to perform scheduled transmission based on the previous periodicity information; and is beneficial to improving service experience.

Another feature and advantage of this disclosure is apparent from the following detailed description, or may be learned partially by practice of this disclosure.

According to an aspect, an embodiment of this disclosure provides a data transmission method, executed by an electronic device, and the method includes:
receiving periodicity information of a service data packet sent by an application object entity;
configuring the periodicity information of the service data packet to an access network-network element by using a configuration instruction;
receiving first indication information sent by the application object entity, the first indication information indicating that the periodicity information of the service data packet changes; and
sending deactivation information to the access network-network element, the deactivation information indicating the access network-network element to suspend scheduled transmission of the service data packet based on the periodicity information.

According to another aspect, an embodiment of this disclosure provides a data transmission method, executed by an electronic device, and the method includes:
obtaining periodicity information of a service data packet;
sending the periodicity information of the service data packet to a core network-network element, so that the core network-network element configures the periodicity information of the service data packet to an access network-network element;
in response to detecting that the periodicity information of the service data packet changes, generating first indication information; and
sending the first indication information to the core network-network element, so that the core network-network element sends deactivation information to the access network-network element, the deactivation information indicating the access network-network element to suspend scheduled transmission of the service data packet based on the periodicity information.

According to another aspect, an embodiment of this disclosure provides a data transmission apparatus, and the apparatus includes:
an obtaining unit, configured to receive periodicity information of a service data packet sent by an application object entity;
a configuration unit, configured to configure the periodicity information of the service data packet to an access network-network element by using a configuration instruction;
a receiving unit, configured to receive first indication information sent by the application object entity, the first indication information indicating that the periodicity information of the service data packet changes; and
a sending unit, configured to send deactivation information to the access network-network element, the deactivation information indicating the access network-network element to suspend scheduled transmission of the service data packet based on the periodicity information.

According to another aspect, an embodiment of this disclosure provides a data transmission apparatus, and the apparatus includes:
an obtaining unit, configured to obtain periodicity information of a service data packet;
a sending unit, configured to send the periodicity information of the service data packet to a core network-network element, so that the core network-network element configures the periodicity information of the service data packet to an access network-network element;
a generation unit, configured to: in response to detecting that the periodicity information of the service data packet changes, generate first indication information; and
an indication unit, configured to send the first indication information to the core network-network element, so that the core network-network element sends deactivation information to the access network-network element, the deactivation information indicating the access network-network element to suspend scheduled transmission of the service data packet based on the periodicity information.

According to another aspect, an embodiment of this disclosure provides a computer storage medium, having a computer program stored therein, and when executing by a processor, the computer program implements the data transmission method according to the foregoing embodiments.

According to another aspect, an embodiment of this disclosure provides an electronic device, including one or more processors, and a storage apparatus, configured to store one or more computer programs. When the one or more computer programs are executed by the one or more processors, the electronic device is enabled to implement the data transmission method according to the foregoing embodiments.

According to another aspect, an embodiment of this disclosure provides a computer program product, where the computer program product includes a computer program, and the computer program is stored in a computer-readable storage medium. A processor of an electronic device reads and executes the computer program from the computer-readable storage medium, to enable the electronic device to implement the data transmission method in the foregoing optional embodiments.

The foregoing general description and the following detailed description are only illustrative and explanatory, and do not limit this disclosure.

### BRIEF DESCRIPTION OF THE DRAWINGS

FIG. 1 is a schematic diagram of an exemplary system architecture applied to the technical solutions of an embodiment of this disclosure.
FIG. 2 is a schematic diagram of a transmission process of a multimedia data packet according to an embodiment of this disclosure.
FIG. 3 is a schematic diagram of a system architecture of a data transmission method according to an embodiment of this disclosure.
FIG. 4 is a schematic diagram of delay jitter distribution comparison of a transmission process of a service data packet according to an embodiment of this disclosure.
FIG. 5 is a flowchart of a data transmission method according to an embodiment of this disclosure.
FIG. 6 is a flowchart of a data transmission method according to an embodiment of this disclosure.
FIG. 7 is a flowchart of a data transmission method according to an embodiment of this disclosure.
FIG. 8 is a flowchart of a data transmission method according to an embodiment of this disclosure.
FIG. 9 is an interactive flowchart of a data transmission method according to an embodiment of this disclosure.
FIG. 10 is an interactive flowchart of a data transmission method according to an embodiment of this disclosure.
FIG. 11 is a block diagram of a data transmission apparatus according to an embodiment of this disclosure.
FIG. 12 is a block diagram of a data transmission apparatus according to an embodiment of this disclosure.
FIG. 13 is a schematic diagram of a structure of an electronic device applied to implement an embodiment of this disclosure.

### DESCRIPTION OF EMBODIMENTS

Example implementations are described in a more comprehensive manner with reference to the drawings. However, the example implementations may be implemented in various manners, and cannot be understood as limited to these examples. On the contrary, an objective of these implementations is provided to make this disclosure more comprehensive and complete, and fully conveys concepts of the example implementations to a person skilled in the art.

In addition, features, structures, or characteristics described in this disclosure may be combined in any appropriate manner in any one or more embodiments. In the following description, a plurality of specific details are provided to provide a fully understanding of embodiments of this disclosure. However, a person skilled in the art may understand that when implementing the technical solutions of this disclosure, not all detailed features in embodiments may be used, one or more specific details may be omitted, or another method, component, apparatus, operation, and the like may be used.

Block diagrams shown in the figures are functional entities only and do not necessarily correspond to physically separate entities. These functional entities may be implemented in a form of software, or these functional entities may be implemented in one or more hardware modules or integrated circuits, or these functional entities may be implemented in different networks and/or processor apparatuses and/or microcontroller apparatuses.

Flowcharts shown in the drawings are only examples for description, do not necessarily include all contents and operations/steps, and are not necessarily executed in a described sequence. For example, some operations/steps may also be decomposed, and some operations/steps may be merged or partially merged, so an actual sequence of execution may change based on an actual situation.

The "plurality" mentioned in this disclosure refers to two or more. The term "and/or" in this specification is an association relationship for describing associated objects, and represents that three relationships may exist. For example, A and/or B may represent the following three cases: Only A exists, both A and B exist, and only B exists. A and/or B may represent the following three cases: Only A exists, both A and B exist, and only B exists.

With the development of 5th-generation mobile generation technology (5G), a plurality of multimedia services that use a large amount of data and a short delay are applied, for example, a cloud gaming service and interactive services such as VR, AR, MR, XR, and CR.

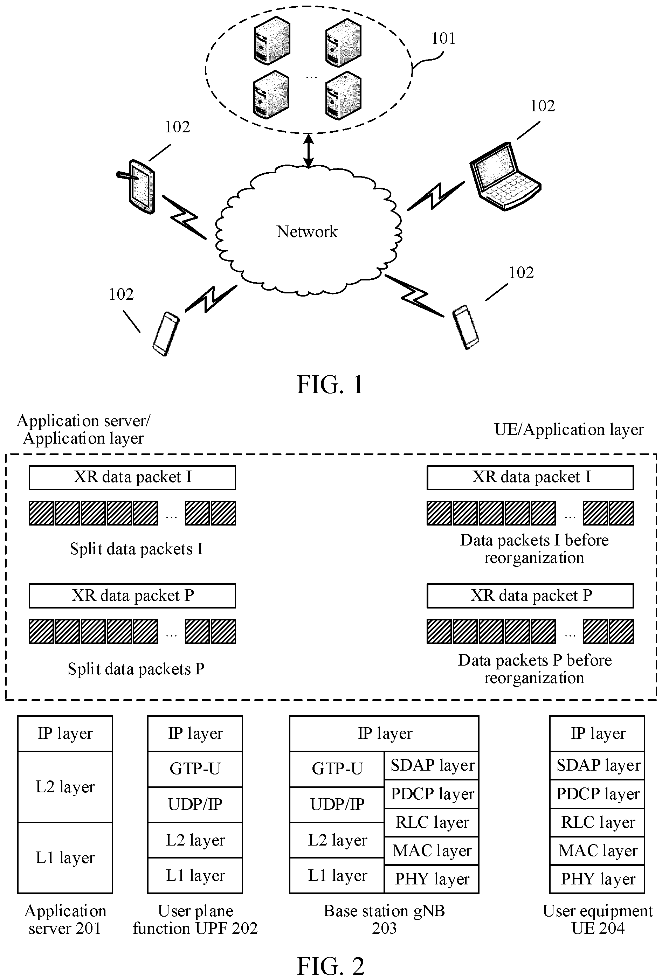

In a cloud gaming scenario shown in FIG. 1, a cloud server 101 is configured to run cloud gaming. The cloud server 101 may render a game image, encode an audio signal and a rendered image, and finally transmit encoded data obtained through encoding to each game client through a network.

The game client may be user equipment (UE) 102 having a streaming media playback capability, a human-computer interaction capability, a communication capability, and the like, for example, a smart phone, a tablet computer, a laptop computer, a desktop computer, a smart television, a smart appliance, an on board terminal, and an aircraft. Alternatively, the game client may be an application running in a terminal device 102. The game client may decode the encoded data transmitted by the cloud server 101, to obtain a stimulated audio and video signal, and play the stimulated audio and video signal.

FIG. 1 is merely a system architecture that represents a cloud gaming system, and does not limit a specific system architecture of the cloud gaming system. For example, in other embodiments, the cloud gaming system may further include a back-end server for scheduling, and the like. In addition, the cloud server 101 may be an independent physical server, or a server cluster or a distributed system composed of a plurality of physical servers, or may alternatively be a cloud server that provides a cloud service, a cloud database, cloud computing, a cloud function, cloud storage, a network service, cloud communication, a middleware service, a domain name service, a security service, a content delivery network (CDN), and a cloud computing service such as big data and an artificial intelligence platform. The game client and the cloud server 101 may be connected directly or indirectly in a wired or wireless communication protocol. This is not limited in this disclosure.

In an interactive service application scenario based on the multimedia, because a multimedia data packet is large, the multimedia data packet needs to be split into a plurality of data packets for transmission during transmission. In some embodiments, as shown in FIG. 2, in the 5G system, a user plane mainly includes an application server 201, a user plane object (UPO) (or "user plane function" (UPF)) 202, a base station (next generation NodeB, gNB) 203, and UE 204.

For some typical service scenarios, transmission of the multimedia data packet is mainly in a downlink direction, for example, from the application server to the UPO, and then the multimedia data packet is sent to the UE through the gNB. During transmission, the multimedia data packet (for example, an XR data packet in FIG. 2) is split in an application layer of the application server. After split data packets as IP packets are transmitted from the application server to the UPO, the 5G system transmits sub data packets to a UE end by using a protocol data unit (PDU) session, submits and reorganizes the multimedia data packets from a protocol stack to recover the multimedia data packets in the UE end.

In the system in FIG. 2, an L1 layer is a physical layer, and is configured to ensure that original data may be transmitted on various physical media; an L2 layer is a data link layer, and the data link layer provides a service to a network layer based on a service provided by the physical layer; an internet protocol (IP) layer is the network layer, and is configured to implement data transmission between two end systems; a UDP is a user datagram protocol; a GTP-U is a general packet radio service (GPRS) tunneling protocol-user plane; the PHY is the physical layer; a MAC is a media access control; an RLC is a radio link control protocol; a PDCP is a packet data convergence protocol; and an SDAP is a service data adaptation protocol.

As described before, for the multimedia service, such as an XR and media (XRM) service, a frame of a multimedia data packet may be split into a plurality of data packets for transmission. A data packet formed by a single multimedia service frame may also have large quantity of bytes, and needs to be carried by a series of internet protocol (IP) data packets. There is a specific correlation between these IP data packets, and a wireless network bandwidth may be saved by processing these packets based on the correlation.

A part of an XRM service flow has periodicity, such as a data packet is generated based on 60/90/120 frames per second (FPS), and a generated video frame may generate the data packet based on a time interval of 16.67 ms/11.11 ms/8.33 ms.

By using these periodicity characteristics, a wireless network may improve usage efficiency of time-frequency resources, for example, by using a semi-persistent scheduling (SPS) or connected-discontinuous reception (C-DRX) mechanism based on the periodicity of the XRM service. However, a premise for using this method is that the 5G system has learned that the XRM service flow has the periodicity.

The C-DRX in embodiments of this disclosure is the connected-discontinuous reception mode. This may make the UE enter a sleep state periodically without detecting a physical downlink control channel (PDCCH), and wake up the UE from the sleep state is to be used, and power saving may be achieved.

In one embodiment, an application object (AO) (or "application function" (AF))/application server (AS) may directly provide periodicity information and a delay jitter distribution characteristic of the service flow for the 5G system (5GS). In addition, it is generally assumed that the multimedia service having the periodicity always has constant periodicity during transmission in the 5G system. Then, the base station may perform C-DRX configuration based on the periodicity and the delay jitter distribution characteristic of the data packet. However, in a process of real-time streaming media transmission, because of impact of computing power or a network condition, the application layer adjusts the periodicity of the service data packet based on performing adaptation, or in a transmission process from the AO/AS to the gNB, the periodicity is affected. Therefore, assuming that the service data packet has the constant periodicity is not always valid.

A demand for a computing power service on a bearer network is mainly reflected in an ultra-large bandwidth, a low delay, and high reliability, security, and flexibility.

Therefore, in one embodiment of this disclosure, in a process of PDU session establishment or QoS flow configuration, a periodicity parameter of an application layer service flow may be set. However, in a transmission process of data packets of the multimedia service such as the XR, configured periodicity is allowed to be activated and deactivated based on a detected periodic change.

In some embodiments, when the periodicity is activated, a radio access network (RAN) side may configure a C-DRX period based on an end-to-end PDU session and a QoS flow parameter, to implement power-saving transmission. However, when the periodicity is deactivated, C-DRX transmission is suspended, and a related core network (CN) network element and a related C-DRX parameter of a RAN node may not be deleted. Therefore, the parameter is not needed to be re-established in an activation process.

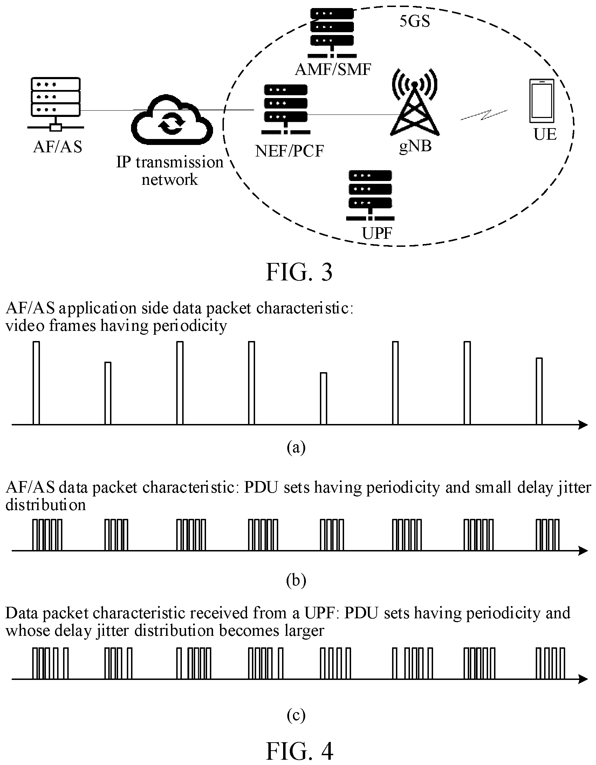

In some embodiments, as shown in FIG. 3, the AO/AS may a control plane object (or "control plane function") of a third party application server, and may implement interaction in an AO-network exposure object (NEO) (or "network exposure function" (NEF))-policy control object (PCO) (or "policy control function" (PCF)) manner or an AO-PCO manner. The AO/AS entity may alternatively implement a user plane function of the third party application server, that is, AS-IP transmission network-UPO interface.

In a system architecture shown in FIG. 3, a 5GS gateway may be the UPO, or may alternatively be an entity responsible for capability opening on the control plane, such as the NEO, the PCO, or a router/switch node deployed between the 5GS and an external network.

The IP transmission network in embodiments of this disclosure may be implemented in a wired or wireless manner, for example, based on a metropolitan area network, an access network, or a wide area network of an optical network depending on a topological relationship between a 5G core (5GC) network boundary and the third party application server. Because the 5G network uses a network architecture beneficial to UPO sinking, and when the AO/AS is located at an edge, and the UPO sinks to this edge location, a topological distance between the 5GC boundary (for example, the UPO at the edge location) and the AO/AS is shortened. However, the AO/AS may alternatively be located at a center cloud. In this situation, UPO sinking cannot solve this problem. Therefore, impact of the IP transmission network on the service flow transmission between a third party server and the 5GC boundary, for example, the UPO, cannot be ignored.

In some embodiments, as shown in FIG. 4(a), an AO/AS application side data packet characteristic may be, for example, a video frame having periodicity; as shown in FIG. 4(b), during transmission, the video frame may be split into a plurality of IP data packets for transmission, where the plurality of IP data packets may form a PDU set, and delay jitter distribution of the IP data packets is small.

Because these IP data packets need to be transmitted between the third party server AS and the 5GS gateway, when the IP data packets are transmitted to the UPO, the delay jitter distribution of the IP data packets may become larger, and may have impact on the periodicity of the IP data packets. As shown in FIG. 4(c), a delay between IP data packets in one PDU set becomes larger, and this causes longer time for receiving one PDU set, and affects the periodicity of the IP data packets. If the periodicity of the IP data packets changes, the C-DRX configuration at the RAN side cannot be adapted, which may cause QoS deterioration.

To avoid the QoS deterioration caused when the periodicity of the IP data packets changes, in embodiments of this disclosure, for the multimedia service (such as an XR service of a preset frame rate) having the periodicity, the periodicity may be transferred from the AO to the 5GC as a reference for the PDU session establishment or the QoS flow parameter configuration. For example, in a process of the PDU session establishment or the QoS flow parameter configuration, the periodicity is configured to the gNB.

In addition, a factor that affects periodicity of a pushing stream due to the computing power and the network condition in the multimedia data stream transmission is considered in this disclosure, and the periodicity parameter configured for the gNB may be deactivated for partial period of time. During the deactivation, the periodicity parameter may still be retained in a 5GC-related network element and the gNB, and a gNB side suspends to perform C-DRX configuration based on the periodicity.

After detecting that the periodicity is stable (or the periodicity is regained), the AO/AS may activate the configured periodicity parameter, and continue to perform C-DRX configuration. Therefore, it may be ensured that the periodicity of the service data packets is stable in the C-DRX, and it may be ensured that QoS requirement is satisfied. This is beneficial to improving service experience.

The following describes implementation of the technical solutions in detail in embodiments of this disclosure.

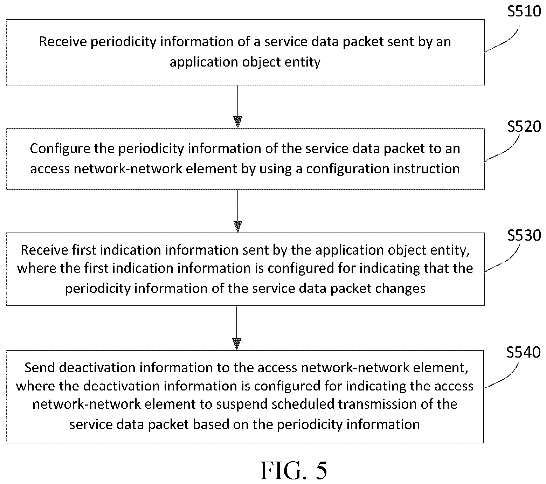

FIG. 5 is a flowchart of a data transmission method according to an embodiment of this disclosure. The data transmission method may be executed by an electronic device corresponding to a core network-network element, for example, may be executed by a PCO. Refer to FIG. 5. The data transmission method may include S510 to S540, and a detailed introduction is as follows.

Operation S510: Receive periodicity information of a service data packet sent by an application object entity.

In some embodiments, after determining the periodicity information of the service data packet, an AO may directly send the periodicity information of the service data packet to the PCO, or the AO first sends the periodicity information to an NEO, and then the NEO forwards the periodicity information to the PCO.

In this operation, the periodicity information refers to whether the service data packet has periodicity, or whether the service data packet is generated periodically. When it is determined that the service data packet has the periodicity, the periodicity information may further include a periodicity parameter of the service data packet, including a value of a period in which the service data packet is generated.

The periodicity information may also indicate whether a service flow of the service data packet has the periodicity.

In some embodiments, the AO may determine the periodicity information of the service data packet based on at least one factor: an encoding and decoding mode of the service data packet; a multimedia service flow transmission parameter corresponding to the service data packet; a pushing parameter of an application server for the multimedia service flow; and a pulling parameter of the application server for the multimedia service flow.

In some embodiments, the encoding and decoding mode of the service data packet, for example, may be one of advanced video coding (AVC), high efficiency video coding (HEVC), versatile video coding (VVC), or the like. In some embodiments, whether the service data packet is obtained based on the period is determined based on the encoding and decoding mode of the service data packet. Therefore, whether the service data packet is generated periodically is determined.

In some embodiments, the multimedia service flow transmission parameter corresponding to the service data packet may include service data content included in the service data packet, for example, one or more of an audio, a video, haptic, or the like. In some embodiments, whether the service data packet is generated periodically is determined based on the service data content included in the service data packet.

In some embodiments, the pushing parameter of an application server for the multimedia service flow may be a pushing frame rate (such as a fixed frame rate or a variable frame rate), and the pulling parameter of the application server for the multimedia service flow may be a pulling frame rate (where the pulling frame rate may also be the fixed frame rate or the variable frame rate). The frame rate, including the fixed frame rate or the variable frame rate, may be the periodicity parameter, included in the periodicity information.

Operation S520: Configure the periodicity information of the service data packet to an access network-network element by using a configuration instruction.

In some embodiments, the configuration instruction is configured to the access network-network element by using a PDU session establishment request or QoS flow configuration information. The PDU session establishment request or the QoS flow configuration information may be generated, where the PDU session establishment request or the QoS flow configuration information include the periodicity information of the service data packet. Then, a PDU session establishment process is initiated based on the PDU session establishment request, or a QoS flow configuration process is performed based on the QoS flow configuration information, to configure the periodicity information of the service data packet for the access network-network element. In some embodiments, the access network-network element may be a gNB.

In some embodiments, the configuration instruction may further instruct that the access network-network element directly performs scheduled transmission on the service data packet based on the periodicity information after receiving the configuration instruction. In this embodiment, the periodicity information of the service data packet is valid by default after configuration.

Operation S530: Receive first indication information sent by the application object entity, where the first indication information is configured for indicating that the periodicity information of the service data packet changes.

In some embodiments, when the application object entity determines, by detecting a factor that affects periodicity of a pushing stream due to computing power and a network condition in a transmission process of the service data packet, that the periodicity information of the service data packet changes; and may send the first indication information to a core network-network element (such as the PCO). In some embodiments, the first indication information may be directly sent to the PCO by the AO, or the AO may first send the first indication information to an NEO, and then the NEO forwards the first indication information to the PCO.

Operation S540: Send deactivation information to the access network-network element, where the deactivation information is configured for indicating the access network-network element to suspend scheduled transmission of the service data packet based on the periodicity information.

In some embodiments, the configuration instruction configured to configure the periodicity information of the service data packet for the access network-network element may further include an indication parameter, where the indication parameter is configured to indicate whether to activate or deactivate the periodicity information of the service data packet.

If the periodicity information of the service data packet is valid by default after configuration, the indication parameter of the configuration instruction is configured to indicate to activate the periodicity information by default. If the PCO receives the foregoing first indication information, the sent deactivation information may be configured for modifying the indication parameter, so that the indication parameter indicates to deactivate the periodicity information of the service data packet.

In some embodiments, after the periodicity information of the service data packet is deactivated, the core network-network element (such as a session management object (SMO) (or "session management function" (SMF)), and an access and mobility management object (AMO) (or "access and mobility management function" (AMF)) and the access network-network element (such as the gNB) may retain a C-DRX configuration parameter. Therefore, the parameters do not need to be established again when the periodicity needs to be activated subsequently. In some embodiments, the indication parameter in the foregoing embodiments may be an explicitly indicated parameter or an implicitly indicated parameter.

In some embodiments, after sending the deactivation information to the access network-network element, in response to receiving second indication information sent by the application object entity after detecting that the periodicity of the service data packet is stable (or the periodicity is regained), the core network-network element (such as the PCO) sends activation information to the access network-network element. The activation information indicates that the access network-network element performs scheduled transmission on the service data packet based on the periodicity information. In some embodiments, the activation information may be configured for modifying the indication parameter configured by the configuration instruction, so that the indication parameter indicates to activate the periodicity information of the service data packet.

In some embodiments, when detecting that a periodic change range of the service data packet is in a preset range, the application object entity determines that the periodicity information of the service data packet is stable (or the periodicity is regained), and then sends the second indication information to the core network-network element. The second indication information may be directly sent to the PCO by the AO, or the AO may first send the second indication information to the NEO, and then the NEO forwards the second indication information to the PCO.

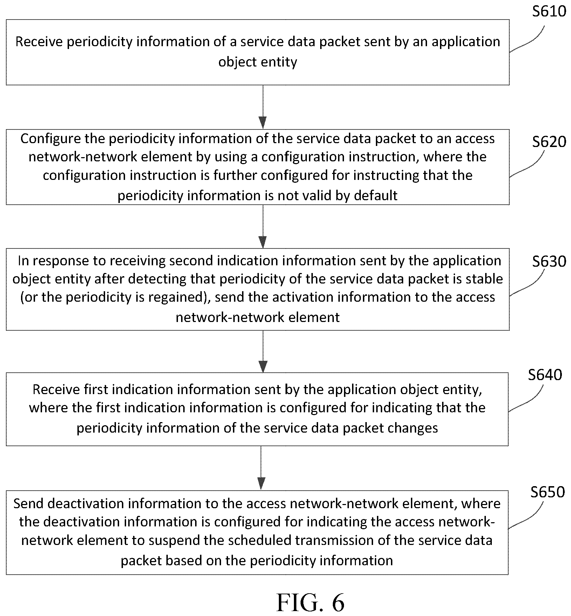

FIG. 6 is a flowchart of a data transmission method according to an embodiment of this disclosure. The data transmission method may be executed by a core network-network element, for example, may be executed by a PCO. Refer to FIG. 6. The data transmission method may include S610 to S650, and a detailed introduction is as follows.

Operation S610: Receive periodicity information of a service data packet sent by an application object entity.

In some embodiments, for specific implementation details of this operation, refer to detailed description of operation S510 in the foregoing embodiments. This is not repeated herein again.

Operation S620: Configure the periodicity information of the service data packet to an access network-network element by using a configuration instruction, where the configuration instruction is further configured for instructing that the periodicity information is not valid by default.

Because the configuration instruction is further configured for instructing that the periodicity information is not valid by default, an access network-network element suspends scheduled transmission of the service data packet based on: the periodicity information after receiving the configuration instruction, and not receiving activation information.

In some embodiments, the configuration instruction configured to configure the periodicity information of the service data packet for the access network-network element may further include an indication parameter indicating whether to activate or deactivate the periodicity information of the service data packet. If the periodicity information of the service data packet is not valid by default after configuration, the indication parameter of the configuration instruction is configured to indicate not to deactivate the periodicity information.

Operation S630: In response to receiving second indication information sent by the application object entity after detecting that periodicity of the service data packet is stable (or the periodicity is regained), send the activation information to the access network-network element.

In some embodiments, when detecting that a periodic change range of the service data packet is in a preset range, the application object entity determines that the periodicity information of the service data packet is stable (or the periodicity is regained), and then sends the second indication information to the core network-network element. The second indication information may be directly sent to a PCO by an AO, or the AO may first send the second indication information to an NEO, and then the NEO forwards the second indication information to the PCO. In some embodiments, the activation information may be configured for modifying the indication parameter configured by the configuration instruction, so that the indication parameter indicates to activate the periodicity information of the service data packet.

Operation S640: Receive first indication information sent by the application object entity, where the first indication information is configured for indicating that the periodicity information of the service data packet changes.

Operation S650: Send deactivation information to the access network-network element, where the deactivation information is configured for indicating the access network-network element to suspend the scheduled transmission of the service data packet based on the periodicity information.

For the description of operation S640 and operation S650, refer to the description of operation S530 and operation S540. This is not repeated herein again.

FIG. 5 and FIG. 6 describe the technical solutions of embodiments of this disclosure from a perspective of the core network-network element. The technical solutions of embodiments of this disclosure are described below from a perspective of the application object entity.

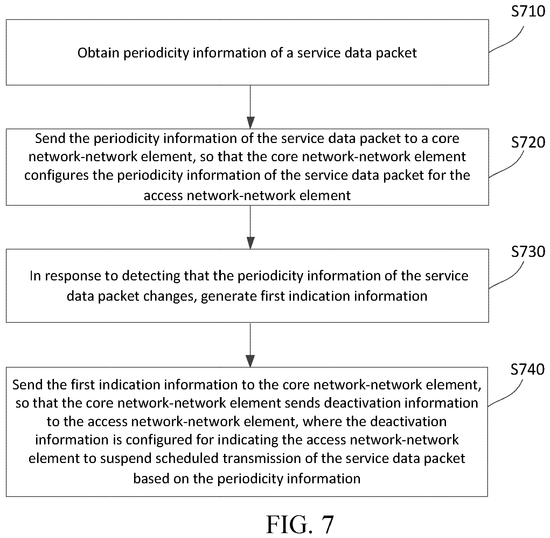

FIG. 7 is a flowchart of a data transmission method according to an embodiment of this disclosure. The data transmission method may be executed by an electronic device corresponding to an application object entity. Refer to FIG. 7. The data transmission method may include S710 to S740, and a detailed introduction is as follows.

Operation S710: Obtain periodicity information of a service data packet.

In some embodiments, the AO may determine the periodicity information of the service data packet based on at least one factor: an encoding and decoding mode of the service data packet; a multimedia service flow transmission parameter corresponding to the service data packet; a pushing parameter of an application server for the multimedia service flow; and a pulling parameter of the application server for the multimedia service flow.

For specific implementation, refer to the description of operation S510.

Operation S720: Send the periodicity information of the service data packet to a core network-network element, so that the core network-network element configures the periodicity information of the service data packet for the access network-network element.

In some embodiments, after determining the periodicity information of the service data packet, the AO may directly send the periodicity information of the service data packet to the PCO, or the AO first sends the periodicity information to an NEO, and then the NEO forwards the periodicity information to the PCO. A process that the core network-network element configures the periodicity information of the service data packet for the access network-network element may refer to the technical solutions of the foregoing embodiments.

Operation S730: In response to detecting that the periodicity information of the service data packet changes, generate first indication information.

In some embodiments, the application object entity may determine, by detecting a factor that affects periodicity of a pushing stream due to computing power and a network condition in a transmission process of the service data packet, that the periodicity information of the service data packet changes. For example, in response to detecting that a periodic change range of the service data packet is greater than a preset value, such as a preset range, it is determined that the periodicity information of the service data packet changes.

Operation S740: Send the first indication information to the core network-network element, so that the core network-network element sends deactivation information to the access network-network element, where the deactivation information is configured for indicating the access network-network element to suspend scheduled transmission of the service data packet based on the periodicity information.

In some embodiments, a process that the core network-network element sends the deactivation information to the access network-network element may refer to the technical solutions of the foregoing embodiments. This is not repeated.

In some embodiments, in response to detecting that the periodicity of the service data packet is stable, or tends to be stable, or the periodicity is regained, the AO may generate second indication information, and then send the second indication information to the core network-network element, so that the core network-network element sends the activation information to the access network-network element. The activation information indicates that the access network-network element performs scheduled transmission on the service data packet based on the periodicity information.

In some embodiments, when detecting that a periodic change range of the service data packet is in a preset range, the application object entity determines that the periodicity information of the service data packet is stable (or the periodicity is regained), and then sends the second indication information to the core network-network element.

The foregoing describes the technical solutions of embodiments of this disclosure from a perspective of the core network-network element and the application object entity. The implementation details of the technical solutions in embodiments of this disclosure are further described from a perspective of interaction between a plurality of device entities.

The technical solutions of embodiments of this disclosure is for the multimedia service having the periodicity. The periodicity may be transferred from the AO to 5GC as a reference for PDU session establishment or QoS flow parameter configuration. For example, in a process of the PDU session establishment or the QoS flow parameter configuration, the periodicity is configured to a gNB.

In addition, a factor that affects periodicity of a pushing stream due to the computing power and the network condition in the multimedia data stream transmission is considered in this disclosure, and the periodicity information configured for the gNB may be deactivated for partial period of time. During the deactivation, the periodicity information may still be retained in a 5GC-related network element, and a gNB side suspends to perform C-DRX configuration based on the periodicity information. After detecting that the periodicity is stable (or the periodicity is regained), the AO/AS may activate the configured periodicity information, and continue to perform C-DRX configuration. Therefore, it may be ensured that the periodicity of the service data packets is stable in the C-DRX, and it may be ensured that QoS requirement is satisfied. This is beneficial to improving service experience.

The service data packet in embodiments of this disclosure may be an XR service data packet, and may also be another data packet of the multimedia service, such as a data packet of a cloud gaming service, and data packets of services such as VR, AR, MR, and CR. The technical solutions of embodiments of this disclosure may be applied to a process of the XR service data packet, and may also be applied to process the data packets of the services such as the cloud gaming, the VR, the AR, the MR, and the CR.

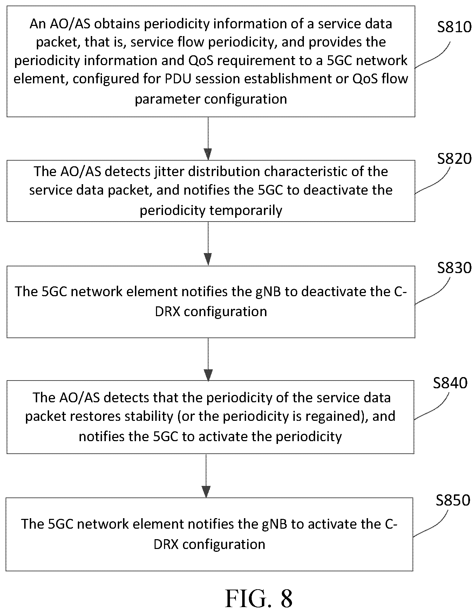

In some embodiments, FIG. 8 is a flowchart of a data transmission method according to an embodiment of this disclosure, including the following operations.

Operation S810: An AO/AS obtains periodicity information of a service data packet, that is, service flow periodicity, and provides the periodicity information and QoS requirement to a 5GC network element, configured for PDU session establishment or QoS flow parameter configuration.

In some embodiments, an application layer pushing stream end may directly obtain a parameter of video content from the video content, including a frame rate, to obtain the periodicity information of the service data packet. For an XR multimedia video stream such as real-time live streaming, the periodicity information may also be determined by the application layer through detection. For example, the periodicity information is determined based on at least one parameters: an encoding and decoding mode of the service data packet; a multimedia service flow transmission parameter corresponding to the service data packet; a pushing parameter of an application server for the multimedia service flow; and a pulling parameter of the application server for the multimedia service flow.

In some embodiments, before a PDU session is established, the service flow periodicity obtained by the application layer may be transferred from the AO to a 5GC, and may be a reference to the PDU session establishment or the QoS flow parameter configuration.

In addition, a factor that affects periodicity of a pushing stream due to the computing power and the network condition in the multimedia data stream transmission is considered in this disclosure, and the periodicity parameter configured for the gNB may be deactivated for partial period of time.

Therefore, in specific configuration, a current PDU session establishment request may be enhanced, the 5GC network element (such as a SMO, or an AMO) and the gNB may add, for parameters of the multimedia service flow such as an XRM, an indication parameter configured for indicating activation and deactivation. The indication parameter may be used in an implicit or an explicit manner. The implicit manner does not need to specifically define the parameter, and is used in the network element, for example, some indication bits may be reused. On the contrary, the explicit manner needs a new indication parameter for indication.

In some embodiments, when the service flow periodicity is configured in a PDU session establishment process or a QoS flow parameter configuration process, when the periodicity is activated by default, a RAN side may configure a C-DRX period based on an end-to-end PDU session and a QoS flow parameter, to implement power-saving transmission.

Operation S820: The AO/AS detects jitter distribution characteristic of the service data packet, and notifies the 5GC to deactivate the periodicity temporarily.

In some embodiments, the AO/AS may determine, by detecting a factor that affects periodicity of a pushing stream due to the computing power and the network condition in a transmission process of the service data packet, that the jitter distribution characteristic of the service data packet changes. For example, in response to detecting that a periodic change range of the service data packet is greater than a preset value, it is determined that there is jitter in periodic transmission of the service data packet. Therefore, the periodicity information of the service data packet changes.

Operation S830: The 5GC network element notifies the gNB to deactivate the C-DRX configuration.

In some embodiments, when receiving indication information (for example, the first indication information) sent by the AO/AS that the periodicity is not stable, the 5GC network element may deactivate the periodicity with the gNB synchronously, for example, may only change an indication bit in the indication parameter, and do not delete the periodicity parameter.

In addition, after deactivating the C-DRX configuration, the gNB and UE suspend performing the C-DRX configuration and pushing a multimedia service flow such as the XRM based on the periodicity information. When the periodicity is deactivated, C-DRX transmission is suspended, but a related CN and a related C-DRX parameter of a RAN node is not deleted. Therefore, the parameter is not needed to be re-established in an activation process.

Operation S840: The AO/AS detects that the periodicity of the service data packet restores stability (or the periodicity is regained), and notifies the 5GC to activate the periodicity.

In some embodiments, when detecting that a periodic change range of the service data packet is in a preset range, the AO/AS may determine that the periodicity information of the service data packet restores the stability (or the periodicity is regained), and then notify the 5GC to activate the periodicity.

Operation S850: The 5GC network element notifies the gNB to activate the C-DRX configuration.

In some embodiments, after receiving indication information (for example, the second indication information) sent by the AO/AS that the periodicity restores the stability (or the periodicity is regained), the 5GC network element may activate the periodicity with the gNB synchronously, and then the gNB and the UE continues to push the multimedia service flow such as the XRM based on the periodic C-DRX configuration.

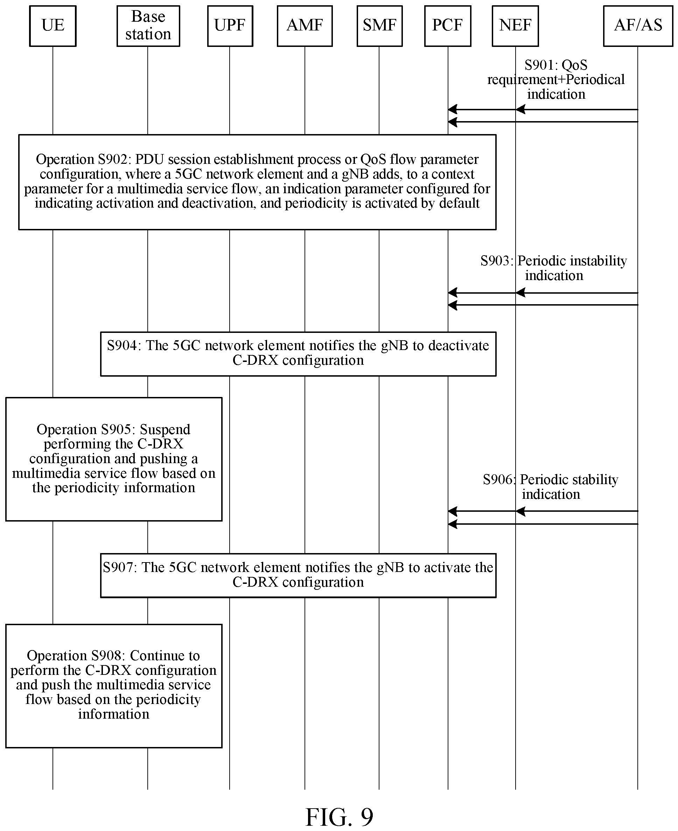

For an interaction process in FIG. 9, the process may include the following operations.

Operation S901: An AO/AS obtains service flow periodicity, and provides a periodicity indication and QoS requirement to a PCO, for example, may directly send the periodicity indication and the QoS requirement to the PCO, or send the periodicity indication and the QoS requirement to an NEO, and then the NEO forwards the periodicity indication and the QoS requirement to the PCO.

Operation S902: Configure the service flow periodicity in a PDU session establishment process or a QoS flow parameter configuration process, where a 5GC network element (such as a SMO, or an AMO) and a gNB may add, to a context parameter for a multimedia service flow such as an XRM, an indication parameter configured for indicating activation and deactivation. The indication parameter may be used in an implicit or an explicit manner.

In addition, the periodicity may be activated by default. In this situation, a RAN side may configure a C-DRX period based on an end-to-end PDU session and a QoS flow parameter, to implement power-saving transmission.

Operation S903: The AO/AS detects that a period of the service data packet sends jitter, and notifies the 5GC to deactivate the periodicity temporarily, for example, may send a periodic instability indication to the PCO.

Operation S904: The 5GC network element notifies the gNB to deactivate the C-DRX configuration.

In some embodiments, when receiving indication information sent by the AO/AS that the periodicity is not stable, the PCO may deactivate the periodicity with the gNB synchronously, for example, may only change an indication bit in the indication parameter, and does not delete the periodicity parameter.

Operation S905: After deactivating the C-DRX configuration, the gNB and UE suspend performing the C-DRX configuration and pushing the multimedia service flow such as the XRM based on the periodicity information.

When the periodicity is deactivated, C-DRX transmission is suspended, but a related CN and a related C-DRX parameter of a RAN node is not deleted. Therefore, the parameter is not needed to be re-established in an activation process.

Operation S906: The AO/AS detects that the periodicity of the service data packet restores stability (or the periodicity is regained), and notifies the 5GC to activate the periodicity, for example, may send a periodic stability indication (or an indication that the periodicity is regained) to the PCO.

Operation S907: The 5GC network element notifies the gNB to activate the C-DRX configuration.

In some embodiments, after receiving indication information sent by the AO/AS that the periodicity restores the stability (or the indication that the periodicity is regained), the 5GC network element may activate the periodicity with the gNB synchronously.

Operation S908: The gNB and UE continue to perform the C-DRX configuration and push the multimedia service flow such as the XRM based on the periodicity information.

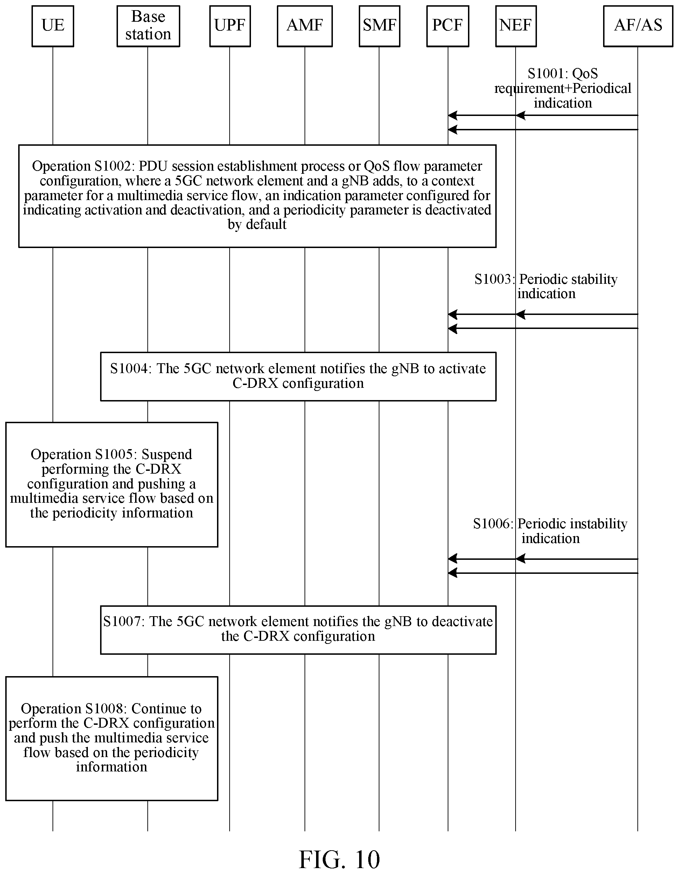

The interaction process in FIG. 9 is that the periodicity is activated by default when the periodicity parameter is configured. In other embodiments of this disclosure, the periodicity may not be activated by default. For details, refer to FIG. 10, and the following operations are included.

Operation S1001: An AO/AS obtains service flow periodicity, and provides a periodicity indication and QoS requirement to a PCO, for example, may directly send the periodicity indication and the QoS requirement to the PCO, or send the periodicity indication and the QoS requirement to an NEO, and then the NEO forwards the periodicity indication and the QoS requirement to the PCO.

Operation S1002: Configure the service flow periodicity in a PDU session establishment process or a QoS flow parameter configuration process, where a 5GC network element (such as a SMO, or an AMO) and a gNB may add, to a context parameter for a multimedia service flow such as an XRM, an indication parameter configured for indicating activation and deactivation. The indication parameter may be used in an implicit or an explicit manner.

In addition, the periodicity may not be activated by default. In this situation, a RAN side may not configure a C-DRX period based on an end-to-end PDU session and a QoS flow parameter, and needs to wait for activation.

Operation S1003: The AO/AS detects that the periodicity of the service data packet is stabile (or has the periodicity), and notifies the 5GC to activate the periodicity, for example, may send a periodic stability indication (or an indication having the periodicity) to the PCO.

Operation S1004: The 5GC network element notifies the gNB to activate the C-DRX configuration. In some embodiments, after receiving indication information that is sent by the AO/AS and that the periodicity is stable (or the indication information having the periodicity), the 5GC network element may activate the periodicity with the gNB synchronously.

Operation S1005: The gNB and UE perform the C-DRX configuration and push the multimedia service flow such as the XRM based on the periodicity information.

Operation S1006: The AO/AS detects that a period of the service data packet sends jitter, and notifies the 5GC to deactivate the periodicity temporarily, for example, may send a periodic instability indication to the PCO.

Operation S1007: The 5GC network element notifies the gNB to deactivate the C-DRX configuration.

In some embodiments, when receiving the indication information sent by the AO/AS that the periodicity is not stable, the PCO may deactivate the periodicity with the gNB synchronously, for example, may only change an indication bit in the indication parameter, and does not delete the periodicity parameter.

Operation S1008: After deactivating the C-DRX configuration, the gNB and UE suspend performing the C-DRX configuration and pushing the multimedia service flow such as the XRM based on the periodicity information.

When the periodicity is deactivated, C-DRX transmission is suspended, but a related CN and a related C-DRX parameter of a RAN node is not deleted. Therefore, the parameter is not needed to be re-established in an activation process.

The foregoing technical solutions of embodiments of this disclosure is for the multimedia service having the periodicity. The periodicity may be transferred from the AO to the 5GC as a reference for PDU session establishment or QoS flow parameter configuration. For example, in a process of the PDU session establishment or the QoS flow parameter configuration, the periodicity is configured to the gNB. In addition, a factor that affects periodicity of a pushing stream due to the computing power and the network condition in the multimedia data stream transmission is considered in this disclosure, and the periodicity parameter configured for the gNB may be deactivated for partial period of time. During the deactivation, the periodicity parameter may still be retained in a 5GC-related network element and the gNB, and a gNB side suspends to perform C-DRX configuration based on the periodicity. After detecting that the periodicity is stable (or the periodicity is regained), the AO/AS may activate the configured periodicity parameter, and continue to perform the C-DRX configuration. Therefore, it may be ensured that the periodicity of the service data packets is stable in the C-DRX, and it may be ensured that QoS requirement is satisfied. This is beneficial to improving service experience.

The following introduces apparatus embodiments of this disclosure, and may be used to execute the data transmission method in embodiments of this disclosure. For details not disclosed in apparatus embodiments of this disclosure, refer to the data transmission method in the foregoing embodiments of this disclosure.

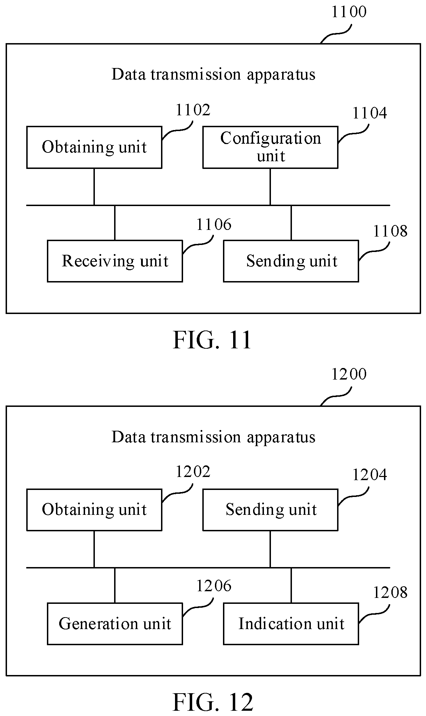

FIG. 11 is a block diagram of a data transmission apparatus according to an embodiment of this disclosure.

As shown in FIG. 11, a data transmission apparatus 1100 according to one embodiment of this disclosure includes an obtaining unit 1102, a configuration 1104, a receiving unit 1106, and a sending unit 1108.

The obtaining unit 1102 is configured to receive periodicity information of a service data packet sent by an application object entity.

The configuration unit 1104 is configured to configure the periodicity information of the service data packet to an access network-network element by using a configuration instruction.

The receiving unit 1106 is configured to receive first indication information sent by the application object entity, where the first indication information is configured for indicating that the periodicity information of the service data packet changes.

The sending unit 1108 is configured to send deactivation information to the access network-network element, where the deactivation information is configured for indicating the access network-network element to suspend scheduled transmission of the service data packet based on the periodicity information.

In some embodiments of this disclosure, based on the foregoing solutions, the configuration unit 1104 is configured to:
generate a protocol data unit PDU session establishment request, where the PDU session establishment request includes the periodicity information of the service data packet; and
initiate a PDU session establishment process based on the PDU session establishment request, to configure the periodicity information of the service data packet for the access network-network element.

In some embodiments of this disclosure, based on the foregoing solutions, the configuration unit 1104 is configured to:
generate quality of service QoS flow configuration information, where the QoS flow configuration information includes the periodicity information of the service data packet; and
perform QoS flow configuration process based on the QoS flow configuration information, to configure the periodicity information of the service data packet for the access network-network element.

In some embodiments of this disclosure, based on the foregoing solutions, the configuration instruction is further configured for instructing the access network-network element to directly perform the scheduled transmission of the service data packet based on the periodicity information after receiving the configuration instruction.

In some embodiments of this disclosure, based on the foregoing solutions, the configuration instruction is further configured for instructing the access network-network element to suspend the scheduled transmission of the service data packet based on the periodicity information after receiving the configuration instruction, and not receiving activation information.

In some embodiments of this disclosure, based on the foregoing solutions, the sending unit 1108 is further configured to:
in response to receiving second indication information sent by the application object entity after detecting that periodicity of the service data packet is stable, send the activation information to the access network-network element.

In some embodiments of this disclosure, based on the foregoing solutions, after sending the deactivation information to the access network-network element, the sending unit 1108 is further configured to: in response to receiving second indication information sent by the application object entity after detecting that the service data packet regains periodicity, send the activation information to the access network-network element, where the activation information is configured for indicating the access network-network element to perform the scheduled transmission of the service data packet based on the periodicity information.

In some embodiments of this disclosure, based on the foregoing solutions, the configuration instruction includes an indication parameter indicating whether to activate or deactivate the periodicity information of the service data packet.

In some embodiments of this disclosure, based on the foregoing solutions, the indication parameter may be an explicitly indicated parameter or an implicitly indicated parameter.

In some embodiments of this disclosure, based on the foregoing solutions, the deactivation information is configured for modifying the indication parameter, so that the indication parameter indicates to deactivate the periodicity information solution the service data packet.

FIG. 12 is a block diagram of a data transmission apparatus according to an embodiment of this disclosure.

As shown in FIG. 12, a data transmission apparatus 1200 according to one embodiment of this disclosure includes an obtaining unit 1202, a send 1204, a generation unit 1206, and an indication unit 1208.

The obtaining unit 1202 is configured to obtain periodicity information of a service data packet.

The sending unit 1204 is configured to send the periodicity information of the service data packet to a core network-network element, so that the core network-network element configures the periodicity information of the service data packet to an access network-network element.

The generation unit 1206 is configured to: in response to detecting that the periodicity information of the service data packet changes, generate first indication information.

The indication unit 1208 is configured to send the first indication information to the core network-network element, so that the core network-network element sends deactivation information to the access network-network element, where the deactivation information is configured for indicating the access network-network element to suspend scheduled transmission of the service data packet based on the periodicity information.

In some embodiments of this disclosure, based on the foregoing solutions, the generation unit 1206 is configured to:
in response to detecting that periodicity of the service data packet is stable or the service data packet the periodicity is regained, generate second indication information; and
send the second indication information to the core network-network element, so that the core network-network element sends activation information to the access network-network element, where the activation information is configured for indicating the access network-network element to perform the scheduled transmission of the service data packet based on the periodicity information.

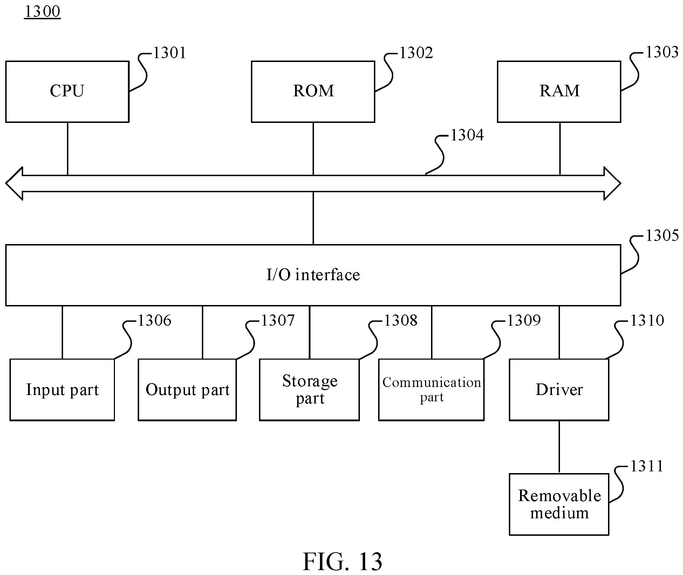

FIG. 13 is a schematic diagram of a structure of an electronic device applied to implement an embodiment of this disclosure.

An electronic device 1300 shown in FIG. 13 is merely an example, and does not limit functions and the scope of usage of embodiments of this disclosure.

As shown in FIG. 13, the electronic device 1300 includes a central processing unit (CPU) 1301, and the central processing unit may perform various appropriate actions and processes based on a program stored in a read-only memory (ROM) 1302 or a program loaded to a random access memory (RAM) 1303 from a storage part 1308, for example, perform the method of the foregoing embodiments. Various programs and data needed for a system operation are stored in the RAM 1303. The CPU 1301, the ROM 1302, and the RAM 1303 are connected through a bus 1304. An input/output (I/O) 1305 is connected to the bus 1304.

The following components are connected to the I/O interface 1305, including an input part 1306 of a keyboard, a mouse, and the like; including an input part 1307 of a cathode ray tube (CRT), a liquid crystal display (LCD), a speaker, and the like; including a storage part 1308 of hardware; and including a communication part 1309 of a network interface card such as a local area network (LAN) card, a modem, and the like. The communication part 1309 performs communication processing via a network such as the internet. A driver 1310 is also connected to the I/O interface 1305 as needed. A removable medium 1311, such as a magnetic disk, an optical disk, a magneto-optical disk, a semiconductor memory, and the like are installed on the drive 1310 as needed, so that it may be read that a computer program is installed to the storage part 1308 as needed.

In some embodiments, based on embodiments of this disclosure, the process described foregoing with reference to the flowchart may be implemented as a computer software program. For example, embodiments of this disclosure include a computer program product, and the computer program product is carried on computer program of a computer-readable medium. The computer program includes a computer program configured to execute the method shown in the flowchart. In this embodiment, the computer program may be uploaded and installed from the network by using the communication part 1309, and/or be installed from the removable medium 1311. When the computer program is executed by the central processing unit (CPU) 1301, various functions limited in a system of this disclosure are executed.

The computer-readable medium shown in embodiments of this disclosure may be a computer-readable signal medium or a computer-readable storage medium, or any combination of the computer-readable signal medium and the computer-readable storage medium. The computer-readable storage medium may be, for example, but is not limited to, an electrical, magnetic, optical, electromagnetic, infrared, or a semiconductor system, apparatus or component, or any combination thereof. More specific examples of the computer-readable storage media may include, but are not limited to an electrical connection having one or more wires, a portable computer disk, a hard disk, a random access memory (RAM), a read-only memory (ROM), an erasable programmable read only memory (EPROM), a flash memory, fiber optics, a compact disc read-only memory (CD-ROM), an optical storage device, a magnetic storage device, or any appropriate combination thereof. In this disclosure, the computer-readable storage medium may be any tangible medium that includes or stores a program. The program may be used by an instruction execution system, apparatus, or device, or may be used by a combination of the instruction execution system, apparatus, or device. However, in this disclosure, the computer-readable signal medium may include a data signal propagated in a baseband or as a part of a carrier wave carrying the computer-readable computer program therein. The propagated data signal may use various forms, including but not limited to an electromagnetic signal, an optical signal, or any appropriate combination of thereof. The computer-readable signal medium may also be any computer-readable medium other than the computer-readable storage medium that may send, propagate, or transmit a program used by the instruction execution system, apparatus, or device, or used by the combination of the instruction execution system, apparatus, or device. The computer program included in the computer-readable media may be transmitted by using any appropriate medium, including but not limited to a wireless medium or a medium wired, or any appropriate combination of thereof.

Flowcharts and block diagrams in the drawings illustrate architectures, functions, and operations that may be implemented using the system, the method, and the computer program product according to various embodiments of this disclosure. Each block in the flowchart or the block diagram may represent a module, a program segment, or a part of code. The module, the program segment, or the part of the code include one or more executable instructions for implementing specific logical functions. In some alternative implementations, the functions noted in the block may occur not in sequence noted in the drawings. For example, two blocks shown one after another may actually be executed substantially in parallel, or the two blocks may sometimes be executed in a reverse order. This depends on the functions involved. Each box in the block diagram or the flowchart and a combination of boxes in the block diagram or the flowchart may be implemented may using a dedicated hardware-based system configured to execute a specified function or operation, or may be implemented by using a combination of dedicated hardware and the computer program.

The units involved in embodiments of this disclosure may be implemented in software or may be implemented in hardware, and the described units may also be provided in a processor. Names of the units do not constitute a limitation on the unit under some situations.

According to another aspect, this disclosure further provides a computer-readable medium. The computer-readable medium may be included in the electronic device described in embodiments, and may also exist alone without being assembled into the electronic device. The computer-readable medium carries one or more computer programs. When the one or more computer programs are executed by the electronic device, the electronic device implements the method described in the foregoing embodiments.

Although several modules or units of the device for action execution are mentioned in the foregoing detailed description, this division is not mandatory. Actually, based on embodiments of this disclosure, features and functions of two or more modules or units described above may be specified in one module or unit. On the contrary, the features and the functions of one module or unit described above may be further divided that is specified in one module or unit.

Through the foregoing description of the implementations, a person skilled in the art can easily understand that example embodiments described here may be implemented by software, or may be implemented by software combined with necessary hardware. Therefore, the technical solutions based on embodiments of this disclosure may be implemented in a form of a software product. The software product may be stored in a non-volatile storage media (may be a CD-ROM, a USB flash disk, a hard disk, and the like) or on the network, including several instructions, so that a computer device (may be a personal computer, a server, a touch terminal, a network device, or the like) executes the method in embodiments of this disclosure.

A person skilled in the art can easily figure out another implementation solution of the implementation, the after considering the specification and practicing this disclosure that is disclosed herein. This disclosure is intended to cover any variations, uses or adaptive changes of this disclosure. Such variations, uses or adaptive changes follow the general principles of this disclosure, and include well-known knowledge and conventional technical means in the art that are not disclosed in this disclosure.

This disclosure is not limited to the precise structures described above and shown in the accompanying drawings, and various modifications and changes can be made without departing from the scope of this disclosure. The scope of this disclosure is subject only to the appended claims.

## Claims

1. A data transmission method, executable by an electronic device, comprising:
receiving periodicity information of a service data packet transmitted by an application object entity;
configuring the periodicity information of the service data packet to an access network-network element by using a configuration instruction;
receiving first indication information transmitted by the application object entity, the first indication information indicating that the periodicity information of the service data packet changes; and
transmitting deactivation information to the access network-network element, the deactivation information indicating the access network-network element to suspend scheduled transmission of the service data packet based on the periodicity information.

2. The data transmission method according to claim 1, wherein the configuring the periodicity information of the service data packet to an access network-network element by using a configuration instruction comprises:
generating a protocol data unit, PDU, session establishment request, the PDU session establishment request comprising the periodicity information of the service data packet; and
initiating a PDU session establishment process based on the PDU session establishment request, to configure the periodicity information of the service data packet for the access network-network element.

3. The data transmission method according to claim 1, wherein the configuring the periodicity information of the service data packet to an access network-network element by using a configuration instruction comprises:
generating quality of service, QoS, flow configuration information, the QoS flow configuration information comprising the periodicity information of the service data packet; and
performing QoS flow configuration process based on the QoS flow configuration information, to configure the periodicity information of the service data packet for the access network-network element.

4. The data transmission method according to claim 1, wherein the configuration instruction is further configured for instructing the access network-network element to directly perform the scheduled transmission of the service data packet based on the periodicity information after receiving the configuration instruction.

5. The data transmission method according to claim 1, wherein the configuration instruction is further configured for instructing the access network-network element to suspend the scheduled transmission of the service data packet based on:
the periodicity information after receiving the configuration instruction, and
not receiving activation information.

6. The data transmission method according to claim 5, further comprising:
in response to receiving second indication information transmitted by the application object entity after detecting that periodicity of the service data packet is stable, transmitting the activation information to the access network-network element.

7. The data transmission method according to claim 1, wherein after the transmitting deactivation information to the access network-network element, the method further comprises:
in response to receiving second indication information transmitted by the application object entity after detecting that the service data packet regains periodicity, transmitting the activation information to the access network-network element, the activation information indicating the access network-network element to perform the scheduled transmission of the service data packet based on the periodicity information.

8. The data transmission method according to claim 1, wherein the configuration instruction comprises an indication parameter indicating whether to activate or deactivate the periodicity information of the service data packet.

9. The data transmission method according to claim 8, wherein the indication parameter is an explicitly indicated parameter or an implicitly indicated parameter.

10. The data transmission method according to claim 8, wherein the deactivation information is configured for modifying the indication parameter, to enable the indication parameter to indicate to deactivate the periodicity information.

11. A data transmission method, executed by an electronic device, comprising:
obtaining periodicity information of a service data packet;
transmitting the periodicity information of the service data packet to a core network-network element, to enable the core network-network element to configure the periodicity information of the service data packet to an access network-network element;
in response to detecting that the periodicity information of the service data packet changes, generating first indication information; and
transmitting the first indication information to the core network-network element, to enable the core network-network element to transmit deactivation information to the access network-network element, the deactivation information indicating the access network-network element to suspend scheduled transmission of the service data packet based on the periodicity information.

12. The data transmission method according to claim 11, further comprising:
in response to detecting that periodicity of the service data packet is stable or the service data packet the periodicity is regained, generating second indication information; and
transmitting the second indication information to the core network-network element, to enable the core network-network element to transmit activation information to the access network-network element, the activation information indicating the access network-network element to perform the scheduled transmission of the service data packet based on the periodicity information.

13. A data transmission apparatus, comprising:
an obtaining unit, configured to receive periodicity information of a service data packet transmitted by an application object entity;
a configuration unit, configured to configure the periodicity information of the service data packet to an access network-network element by using a configuration instruction;
a receiving unit, configured to receive first indication information transmitted by the application object entity, the first indication information indicating that the periodicity information of the service data packet changes; and
a transmitting unit, configured to transmit deactivation information to the access network-network element, the deactivation information indicating the access network-network element to suspend scheduled transmission of the service data packet based on the periodicity information.

14. The data transmission apparatus according to claim 13, wherein the configuration instruction is further configured for instructing the access network-network element to suspend the scheduled transmission of the service data packet based on:
the periodicity information after receiving the configuration instruction, and
not receiving activation information.

15. The data transmission apparatus according to claim 14, wherein the transmitting unit is further configured to: in response to receiving second indication information transmitted by the application object entity after detecting that periodicity of the service data packet is stable, transmit the activation information to the access network-network element.

16. The data transmission apparatus according to claim 13, wherein after transmitting the deactivation information to the access network-network element, the transmitting unit is further configured to: in response to receiving second indication information transmitted by the application object entity after detecting that the service data packet regains periodicity, transmit activation information to the access network-network element, the activation information indicating the access network-network element to perform the scheduled transmission of the service data packet based on the periodicity information.

17. The data transmission apparatus according to claim 13, wherein the configuration instruction comprises an indication parameter indicating whether to activate or deactivate the periodicity information of the service data packet.

18. A data transmission apparatus, comprising:
an obtaining unit, configured to obtain periodicity information of a service data packet;
a transmitting unit, configured to transmit the periodicity information of the service data packet to a core network-network element, to enable the core network-network element to configure the periodicity information of the service data packet to an access network-network element;
a generation unit, configured to: in response to detecting that the periodicity information of the service data packet changes, generate first indication information; and
an indication unit, configured to transmit the first indication information to the core network-network element, to enable the core network-network element to transmit deactivation information to the access network-network element, the deactivation information indicating the access network-network element to suspend scheduled transmission of the service data packet based on the periodicity information.

19. A computer-readable storage medium, having a computer program stored therein, the computer program, when executed by a processor, implementing the data transmission method according to any one of claims 1 to 12.

20. An electronic device, comprising
one or more processors; and
a memory, configured to store one or more computer programs, when the one or more computer programs being executed by the one or more processors, the electronic device being enabled to implement the data transmission method according to any one of claims 1 to 12.

21. A computer program product, the computer program product comprising computer program, the computer program being stored in a computer-readable storage medium, and a processor of an electronic device reading and executing the computer program from the computer-readable storage medium, to enable the electronic device to execute the data transmission method according to any one of claims 1 to 12.
